# EUROPEAN PATENT SPECIFICATION

(11) **EP 0 274 091 B1**
(45) Date of publication and mention of the grant of the patent: **27.07.1994**
(21) Application number: 87118553.4
(22) Date of filing: 15.12.1987
(51) Int. Cl.: G01F 23/28

(54) **Optical displacement sensor**
Optischer Verschiebungsaufnehmer
Capteur optique de déplacement

(30) Priority: 07.01.1987 JP 501/87
(43) Date of publication of application: 13.07.1988
(73) Proprietor: KABUSHIKI KAISHA TOSHIBA, Kawasaki-shi, Kanagawa-ken 210 (JP)
(72) Inventor: Iwamoto, Katsuharu, Yokohama-shi Kanagawa-ken (JP); Kawakami, Osamu, Yokosuka-shi Kanagawa-ken (JP); Miyagawa, Hideo, Yokohama-shi Kanagawa-ken (JP)
(74) Representative: Ritter und Edler von Fischern, Bernhard,Dipl.-Ing.

(56) References cited:
- EP-A- 0 135 423
- EP-A- 0 189 339
- EP-A- 0 237 850
- PATENT ABSTRACTS OF JAPAN, vol. 6, no. 198 (P-147)[1076], 7th October 1982 ; & JP-A-57 108 605
- FIRST INTERNATIONAL CONFERENCE ON OPTICAL FIBRE SENSORS, 26th - 28th April 1983, The Institution of Electrical Engineers, Savoy Place, London, GB, pages 100-103; D.A. JACKSON: "High precision remote liquid level measurement using a combination of optical radar and optical fibres"

## Description

### Field of the Invention

The present invention relates to an optical displacement sensor being resistant to electromagnetic induction generated by large currents and high voltages, and more specifically to a liquid level sensor, for instance, incorporated in electric power installations such as circuit breakers or electric power machines such as generators.

### Description of the Prior Art

In conventional float-type liquid level sensors, since wires are used to transmit signals, the output signal is subjected to the influence of electromagnetic induction caused by large currents and high voltages generated from the power equipment installed in an industrial plant, so that error will readily be produced.

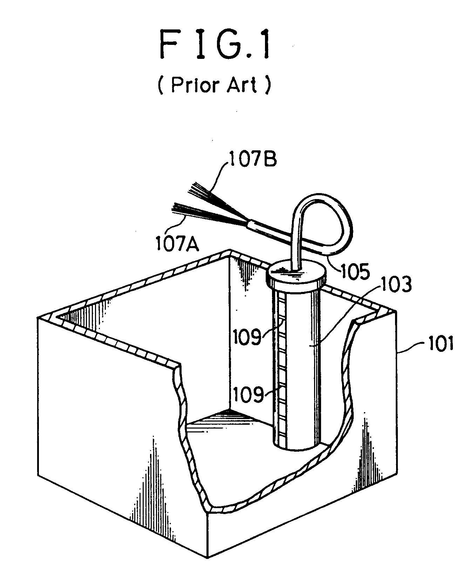

To overcome the above-mentioned problems, Japanese Unexamined Published (Kokai) Pat. Appl. No 53-68276 discloses an optical fiber type liquid level sensor being resistant to external electromagnetic induction. In this optical liquid level sensor, as shown in Fig. 1, a liquid level probe 103 is vertically disposed within a tank 101. A first fiber group 107A and a second fiber group 107B are introduced to the probe 103 via a conduit 105 in such a way that a pair of two fibers each selected from the two groups 107A and 107B, respectively are guided and positioned in step fashion at each height 109 along the longitudinal direction of the cylindrical probe 103. Therefore, a liquid level can be measured by checking whether light transmitted through the first group fibers and them reflected from a liquid level can be received by the second group fibers in dependence upon a change in refractive index.

In the above-mentioned prior art liquid level sensor, however, since the liquid level is measured in digital fashion by a plurality of pairs of optical fibers arranged steppedly along the longitudinal direction of the probe, there exists a problem in that it is impossible to measure liquid level continuously and accurately in analog fashion.

EP-A-0189339 describes a liquid level height-measuring apparatus comprising a distance-measuring light wave generating means for generating distance-measuring light waves optically modulated at a given modulation frequency; an objective optical means for irradiating the distance-measuring light waves onto a liquid level to be distance-measured and condensing the light reflected on the liquid level to be distance-measured; a light receiving means for receiving the reflected distance-measuring light waves led through the objective optical means; a distance-measuring outward light wave transmission piping means for leading the distance-measuring light waves from the distance-measuring light wave generation means to the objective optical means; a distance-measuring return light wave transmission piping means for leading the light waves from the objective optical means to the light receiving means; and a reference light wave transmission piping means having almost the same light path length as the total light path length of the outward and the return light wave transmission piping means.

The principal of the method of operation relies on determining the distance to the surface of a liquid by generating a light beam which is modulated and by comparing the phase of the modulated light which returns through optical fibers with the signal from a reference length of fiber.

JP-A-57-108605 describes a method of measuring the distance to a liquid surface. Two optical fibers are inclined at an angle and light is projected through one and received by the other. The intensity of received light in the one fiber is related to the distance to the liquid surface.

### SUMMARY OF THE INVENTION

It is the primary object of the present invention to provide an optical displacement sensor by which a displacement between an optical fiber end and an object surface can be measured accurately and continuously in analog fashion.

The above object of the invention is solved by an optical displacement sensor for measuring a distance to a surface to be measured, which comprises:
- a light source;
- a light transmitting optical fiber for transmitting light from said light source to the surface to be measured;
   - a light receiving optical fiber for receiving light reflected from the surface to be measured;
- a reference light optical fiber for guiding light from said light source; and
- a reflected light sensor for transducing a reflected light guided through said light receiving optical fiber into a reflection signal;
characterized in that the optical displacement sensor is further provided with:
(a) a reference light sensor for transducing a reference light guided through said reference light optical fiber into a reference signal;
(b) an operational circuit for carrying out an arithmetical calculation on both the reflection signal and the reference signal, to cancel out light intensity fluctuations and fiber vibrations of the sensor; and
(c) an adjusting circuit for carrying out calculations to generate a distance signal indicative of relationship between output signal level of said operational circuit and the distance to the surface to be measured.

To eliminate light fluctuations, it is preferable to arrange the reference light optical fiber along both the light transmitting and receiving optical fibers. In this case, the reference light guided from the light source along the light transmitting optical fiber is reflected from a cavity formed near ends of the light transmitting and receiving optical fibers and then introduced to the reference light sensor along the light receiving optical fiber.

The operational circuit calculates a division or subtraction of the reflected signal and the reference signal to cancel out change in signal level due to disturbance. The adjusting circuit obtains a linear relationship between the reflected signal level and distance to a surface to be measured in logarithmic graduations and generates a distance signal corresponding to the reflected signal.

In the optical displacement sensor of the present invention, since the reference light is guided along the light transmitting and/or receiving optical fiber to the reference light sensor and further the operational circuit calculates the reflected signal on the basis of the reference signal to cancel out change in the reflected signal level due to disturbance (e.g. light intensity fluctuations or fiber vibrations), it is possible to measure a displacement continuously and accurately in analog fashion without being subjected to the influence of disturbance.

### BRIEF DESCRIPTION OF THE DRAWINGS

The features and advantages of the optical displacement sensor according to the present invention will be more clearly appreciated from the following description of the preferred embodiments of the invention taken in conjunction with the accompanying drawings in which like reference numerals designate the same or similar elements or sections throughout the figures thereof and in which:
Fig. 1 is a perspective view diagrammatically showing the feature of a prior-art liquid level sensor;
Fig. 2 is a diagrammatical illustration showing a first embodiment of the optical displacement sensor according to the present invention;
Fig. 3A is a diagrammatical illustration showing a second embodiment of the optical displacement sensor according to the present invention;
Fig. 3B is an enlarged fiber arrangement view when seen from line IIIB-IIIB in Fig. 3A;
Fig. 4A is a diagrammatical illustration showing a third embodiment of the optical displacement sensor according to the present invention;
Fig. 4B is an enlarged cross-sectional view showing a reference light cavity formed in the tank cap in the third embodiment, and
Fig. 5 is a graphical representation showing the linear relationship between distance and output signal level in the third embodiment shown in Fig. 4A in logarithmic graduations.

### DETAILED DESCRIPTION OF THE PREFERRED EMBODIMENTS

With reference to the attached drawings, embodiments of the optical displacement sensor according to the present invention will be described by taking the case of a liquid level sensor.

The liquid level sensor comprises a light source 1; a light transmitting optical fiber 3; a reference light optical fiber 5; a light receiving optical fiber 7, a reference light sensor (photodiode) 9; a reflected light sensor (reflection photodiode) 11, an operational circuit 13, and an adjusting circuit 15.

The light source 1 is an light emitting diode (LED) of a relatively long life or a halogen lamp of a relatively large light intensity.

The oil tank OT constitutes a part of a hydraulic system provided for a circuit breaker, for instance. The tank OT includes a lid LID in which a cap CAP is provided. When the quantity of oil changes within the oil tank OT, the liquid level LEV, that is, a distance D between the lid LID and the level LEV changes.

The light transmitting optical fiber 3 is connected between the light source 1 and the cap CAP disposed in the lid LID of the oil tank OT. The reference light optical fiber 5 is branched off from the light transmitting optical fiber 3 via a photocoupler 17 and connected to the reference photodiode 9. The light receiving optical fiber 7 is connected between the cap CAP and the reflection photodiode 11.

Further, a condenser lens 19 is disposed in the optical fiber 3 so as to face the light source 1 and another condenser lens 21 is disposed in the same optical fiber 3 so as to face a liquid level LEV in the oil tank OT. Furthermore, another condenser lens 23 is disposed in the optical fiber 7 so as to face the liquid level LEV.

The light transmitting optical fiber 3 and the light receiving optical fiber 7 are guided together by a conduit (not shown) from the photocoupler 17 to the lid cap CAP, so that these two fibers 3 and 7 are vibrated in the same way when the tank OT is vibrated.

Further, these two optical fibers 3 and 7 are bent at an angle ϑ with respect to a normal line of the liquid level at the cap CAP in such a way that a light emitted from the end of the fiber 3 and reflected from the level LEV can be more efficiently received by the end of the receiving fiber 7, as compared when these two fibers 3 and 7 are vertically fixed to the cap CAP at an angle of ϑ=0.

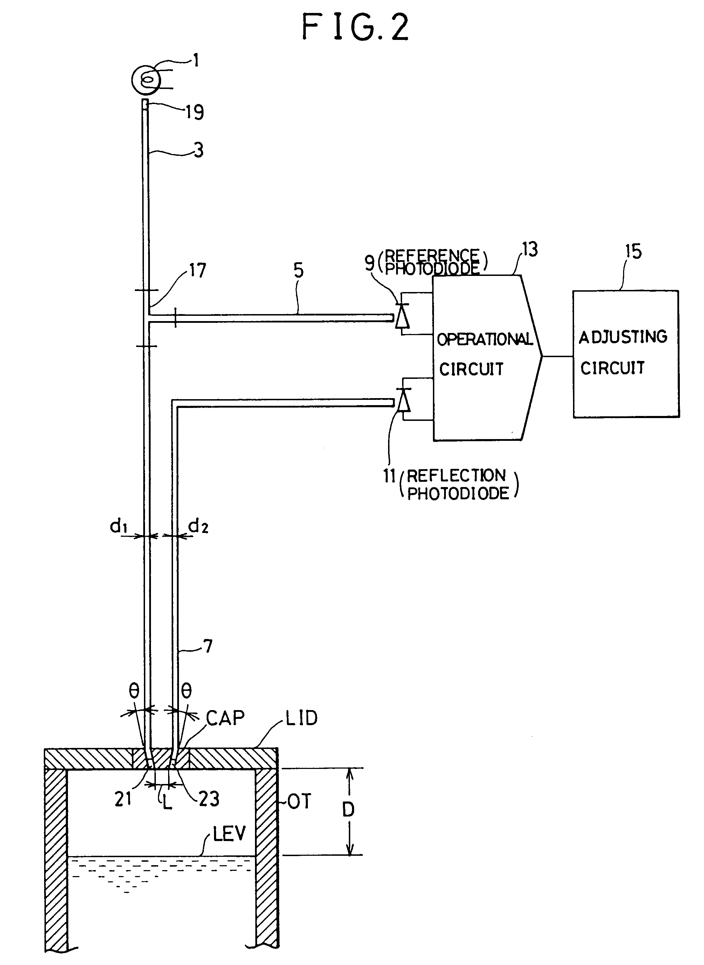

Further, a part of the light receiving optical fiber 7 is guided to the reflection photodiode 11 in parallel to the reference light optical fiber 5, as shown in Fig. 2. These two optical fibers 5 and 7 are guided through a conduit (not shown) from near the photocoupler 17 to the two photodiode 9 and 11. Therefore, when the sensor is vibrated vertically, it is possible to eliminate the influence of vibrations, as described later.

The reference photodiode (photosensitive element) 9 and the reflection photodiode 11 are both of the same type, each of which transduces a light signal into an electric signal. In more detail, the reference photodiode 9 receives light emitted from the light source 1 and guided through the reference fiber 5, and converts the reference light into a reference signal corresponding thereto. The reflection photodiodes 11 receives light emitted from the light source 1, reflected from the level LEV and guided through the light receiving optical fiber 7, and converts the reflected light into a reflected signal corresponding thereto.

The operational circuit 13 executes necessary calculations on the basis of the reference signal and the reflected signal in order to eliminate change in light intensity due to disturbance of the liquid level sensor. The above calculations are divisional calculation of the reflected signal by the reference signal, or subtraction or multiplication or combinations of these calculations.

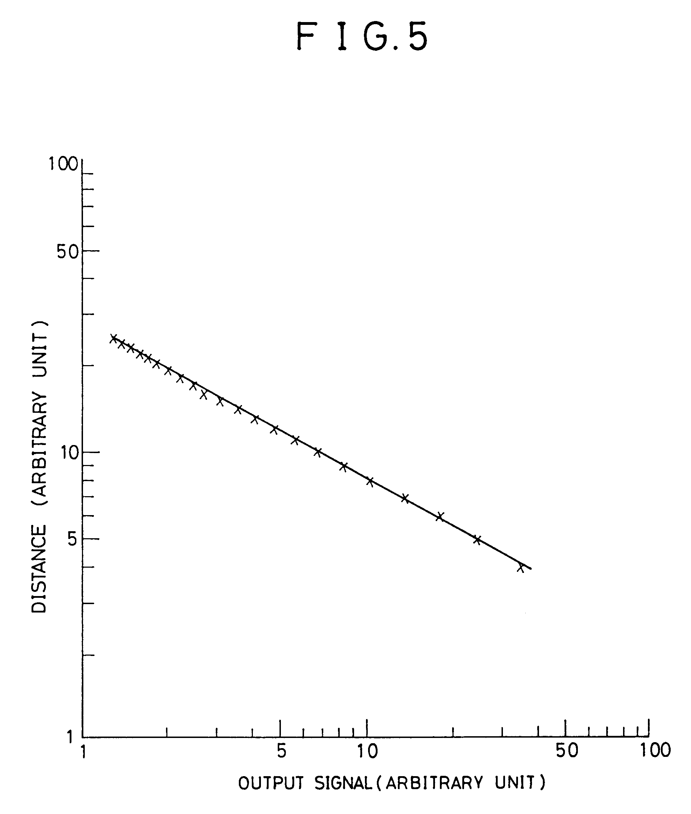

The adjusting circuit 15 executes calculations to obtain a linear relationship between the distance D (mm) to the liquid level LEV and the output signal voltage (V) (processed signal) of the operational circuit calculator 13 as depicted in Fig. 5, in which both the values are shown in logarithmic graduations. A distance signal corresponding to the processed signal is outputted from this adjusting circuit 15 on the basis of the obtained linear relationship between the two. In general, the intensity of light reflected from the liquid level LEV is inversely proportional to the square D² of the distance D or height of the gaseous phase. That is, the longer the gaseous phase D is, the smaller will be the reflected light intensity, or vice versa.

Further, the intensity of light reflected from the liquid level LEV is a function of a diameter d₁ of the light transmitting fiber 3, a diameter d₂ of the light receiving fiber 7, a distance L between the ends of the two fibers 3 and 7, an angle ϑ of the fibers 3 and 7 with respect to the normal line from the liquid level LEV, etc. Therefore, it is possible to continuously obtain the gaseous height on the basis of the reflected light signal relative to the reference light signal under due considerations of the above-mentioned factors d₁, d₂, L, ϑ, etc.

The operation will be described hereinbelow.

The light emitted from the light source 1 is introduced onto the liquid level LEV through the light transmitting optical fiber 3. The light reflected from the liquid level LEV is introduced to the reflection photodiode 11 via the light receiving optical fiber 7 and converted into a reflected signal by the reflection photodiode 11.

On the other hand, light emitted from the light source 1 and passed through the light transmitting optical fiber 3 is branched through the coupler 17, introduced through the reference light optical fiber 5 to the reference photodiode 9 and transduced into a reference signal by the reference photodiode 9.

The electric signals thus obtained by the two photodiodes 9 and 11 are inputted to the operational circuit 13 for division calculation, for instance to eliminate change in signal level due to disturbance. The operated signal is inputted to the adjusting circuit 15 in order to generate a distance signal indicative of a distance to the level in accordance with linear relationship between the operated signal level and the distance to the surface expressed in logarithmic graduations.

Since the displacement of the liquid level LEV can be measured continuously in analog fashion as described above, it is possible to detect the displacement more finely as compared with the conventional digital measurement.

Here, when the quantity of light from the light source 1 increases or decreases, that is, a disturbance occurs, both the outputs of the reference and reflection photodiode 9 and 11 also change according to change in quantity of light emitted. However, since these two outputs are processed on the basis of division calculation in the present embodiment, it is possible to eliminate change in the quantity of light due to disturbance, that is, an error due to disturbance, thus enabling more accurate measurement.

Further, since the light transmitting and receiving optical fibers 3 and 7 are vibrated together due to an external force, it is possible to eliminate change in the quantity of light due to vibration in dependence upon the above-mentioned division calculation.

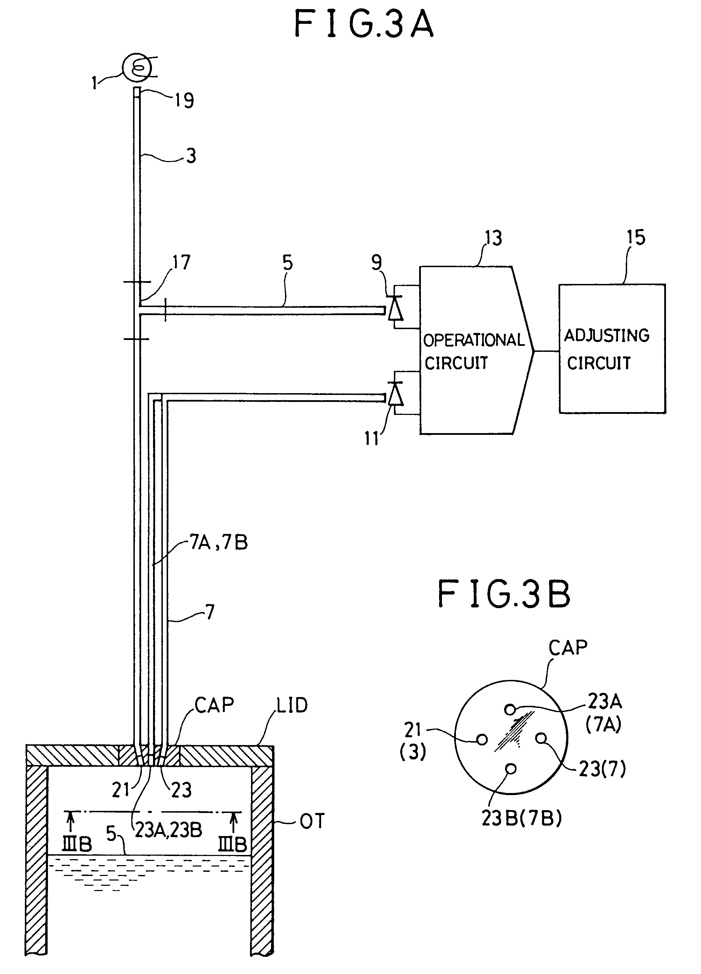

Fig. 3A shows a second embodiment of the displacement sensor according to the present invention, in which a pair of additional light receiving optical fibers 7A and 7B are disposed in symmetry with respect to the line connecting between the light transmitting and receiving optical fibers 3 and 7 at the cap CAP. Further, a condenser lens 23A is attached to the lower end of the light receive fiber 7A, and a condenser lens 23B is also attached to the lower end of the light receive fiber 7B to stabilize the optical axis of the fibers.

In this second embodiment, since light reflected from the liquid level LEV surface can be received by three light receiving optical fibers 7, 7A, 7B arranged 90 degrees angular distance away from each other, the intensity of light reflected from the liquid level surface and received by the light receiving fibers can be increased for providing a further accurate measurement operation.

In the above-mentioned embodiments, various modifications can be considered, without being limited to the sensors shown in Fig. 2 and 3. For instance, the reference light can be introduced directly from the light source 1 to the reference photodiode 9 without branching it from the light transmitting optical fiber 3. Further, it is of course possible to apply a half mirror in place of the photocoupler 17.

Further, the above-mentioned condenser lens 21, 23, 23A and 23B are not necessarily required, and the angle ϑ at the end of the fibers (shown in Fig. 2) can be selected to zero. In these cases, although the intensity of the reflected light may be lowered, this disadvantage can be overcome by placing a reflector on the liquid level LEV or by increasing the sensitivity of photodiodes 9 and 11.

Further, it is also preferable to use optical fiber bundles instead of each single optical fiber 3, 7, 5, 7A, 7B. In this case, an averaged value of a plurality of optical fibers is introduced to the photodiodes 9 or 11.

In the above-mentioned embodiments, it is possible to measure a displacement in analog fashion by calculating a ratio of reflected light intensity to reference light intensity. Further, since the reference light can be introduced from the same light source to the reference light sensor, even if the intensity of the light source changes, it is possible to cancel the influence of change in light intensity from the light reflected from the liquid level LEV. Furthermore, since the reference optical fiber 5 is arranged in parallel to a part of the light receiving optical fiber 7 over a distance between the photocoupler 17 and the reference photodiode 9, when the optical fibers 5 and 7 arranged in parallel to each other are vibrated together in the same way, it is possible to cancel the influence of change in light intensity due to the optical fiber vibration from the light reflected from the liquid level LEV.

In the first and second embodiments, since the reference optical fiber 5 and the light receiving optical fiber 7 are both arranged in parallel only in the horizontal direction, when the sensor is vibrated vertically, it is possible to effectively eliminate the influence of vertical fiber vibrations. However, when the sensor is vibrated horizontally, since the reference optical fiber 5 is not arranged vertically in parallel to the light receiving fiber 7, it is impossible to effectively eliminate the influence of horizontal fiber vibrations.

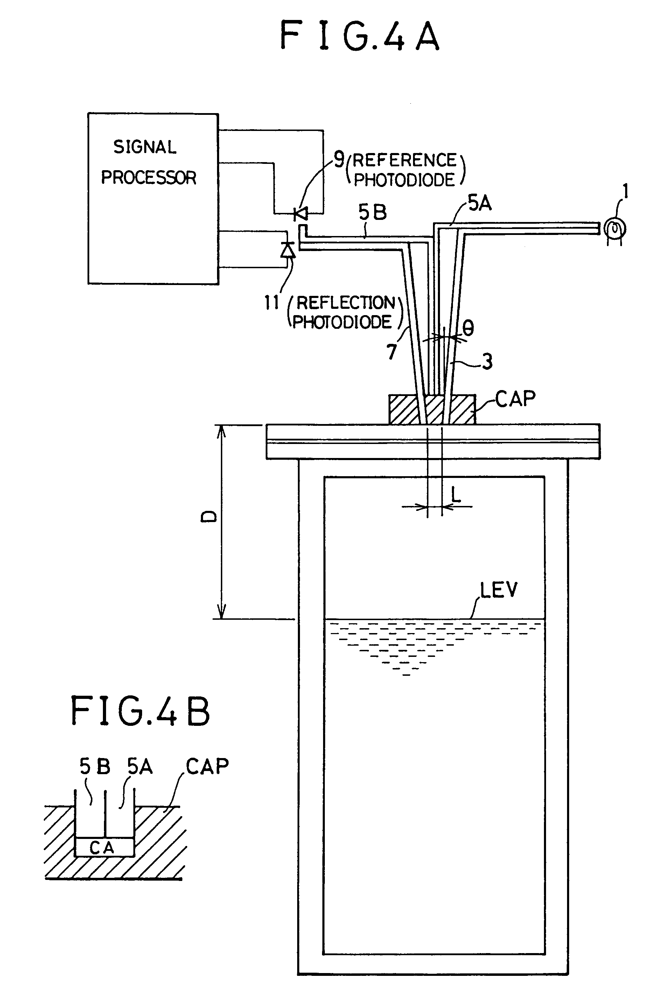

Fig. 4A shows a third embodiment of the present invention which can eliminate the influence of fiber vibrations in all the directions.

In the drawing, the reference optical fiber 5 is divided into two fibers 5A and 5B. The first reference optical fiber 5A extends from the light source 1 to a cavity CA formed in the metal cap CAP, while the second reference optical fiber 5B extends from the cavity CA to the reference photodiode 9 in parallel to both the light transmitting and receiving optical fibers 3 and 7. Further, it should be noted that the reference light is introduced from the light source 1 to the cavity CA and reflected from the cavity walls and then further introduced to the reference photodiode 9.

In this third embodiment shown in Fig. 4A, since the reference optical fibers 5A and 5B are arranged perfectly in parallel to the light transmitting and receiving fibers 3 and 7, it is possible to further effectively eliminate the harmful influence upon the displacement sensor due to disturbance, thus improving the precision of the displacement measurement.

The displacement sensor of the present invention has been described by taking the case of the liquid level sensor. However, without being limited thereto, it is of course possible to apply the optical displacement sensor of the present invention to a solid displacement gauge for measuring a displacement of a solid from a predetermined position.

## Claims

1. An optical displacement sensor for measuring a distance to a surface to be measured, which comprises:
- a light source (1);
- a light transmitting optical fiber (3) for transmitting light from said light source (1) to the surface to be measured;
- a light receiving optical fiber (7) for receiving light reflected from the surface to be measured;
- a reference light optical fiber (5) for guiding light from said light source (1); and
- a reflected light sensor (11) for transducing a reflected light quided through said light receiving optical fiber (7) into a reflection signal;
characterized in that the optical displacement sensor is further provided with:
(a) a reference light sensor (9) for transducing a reference light guided through said reference light optical fiber (5) into a reference signal;
(b) an operational circuit (13) for carrying out an arithmetical calculation on both the reflection signal and the reference signal, to cancel out light intensity fluctuations and fiber vibrations of the sensor; and
(c) an adjusting circuit (15) for carrying out calculations to generate a distance signal indicative of distance to the surface to be measured on the basis of a relationship between output signal level of said operational circuit (13) and the distance to the surface to be measured.

2. The optical displacement sensor as set forth in claim 1, wherein said light transmitting optical fiber (3) and said light receiving optical fiber (7) are provided substantially integral with each other.

3. The optical displacement sensor as set forth in claim 1, wherein a plurality of light receiving optical fibers (7, 7A, 7B) are arranged to increase intensity of light reflected from the surface to be measured.

4. The optical displacement sensor as set forth in claim 1, wherein said reference light optical fiber (5) is branched from said light transmitting optical fiber (3).

5. The optical displacement sensor as set forth in claim 4, wherein said reference light optical fiber (5) is arranged along said light receiving optical fiber (7).

6. The optical displacement sensor as set forth in claim 1, wherein said reference light optical fiber (5A) guides the reference light from said light source (1) to a cavity (CA) formed near ends of both said light transmitting and receiving optical fibers (3, 7) and further guides the reference light reflected from the cavity (CA) to said reference light sensor (9).

7. The optical displacement sensor as set forth in claim 6, wherein said reference light optical fiber (5) for guiding the reference light from said light source (1) to the cavity (CA) is arranged along said light transmitting optical fiber, and said reference light optical fiber for guiding the reference light from the cavity (CA) to said reference light sensor is arranged along said light receiving optical fiber, respectively.

8. The optical displacement sensor as set forth in claim 1, wherein said operational circuit (13) calculates a division of the reflected signal by the reference signal in signal level.

9. The optical displacement sensor as set forth in claim 1, wherein said operational circuit (13) calculates a subtraction of the reference signal from the reflected signal in signal level.

10. The optical displacement sensor as set forth in claim 1, wherein said adjusting circuit (15) obtains a linear relationship between signal level of the operated signal and distance to the surface to be measured in logarithmic graduations to generate a distance signal corresponding to the operated signal.

11. The optical displacement sensor as set forth in claim 1, wherein each optical fiber (3) is provided with condenser lens (19, 21) at each end thereof to stabilize each optical axis of the optical fiber (3).

12. The optical displacement sensor as set forth in claim 1, wherein ends of said light transmitting and receiving optical fibers (3, 7) are bent at an angle with respect to a normal of the surface to be measured so as to effectively transmit and receive light to and from the surface to be measured.

13. The optical displacement sensor as set forth in claim 1, wherein said light transmitting optical fiber (3), said light receiving optical fiber (7) and said reference light optical fiber (5) are an optical fiber bundle, respectively composed of a plurality of optical fibers.

## Patentansprüche

1. Optischer Wegsensor zur Messung eines Abstandes zu einer zu messenden Oberfläche mit:
- eine Lichtquelle (1);
- eine optischen Lichtleitfaser (3) zur Übertragung von Licht von der Lichtquelle (1) zur zu messenden Oberfläche;
- eine optischen Lichtempfangsfaser (7) zur Aufnahme des von der zu messenden Oberfläche reflektierten Lichts;
- eine optischen Referenzlichtfaser (5) zur Leitung von Licht von der Lichtquelle (1) und
- einen Reflexlichtsensor (11) zur Umwandlung eines reflektierten, durch die Lichtempfangsfaser (7) geleiteten Lichts in ein Reflexsignal;
dadurch gekennzeichnet, daß der optische Wegsensor weiterhin versehen ist mit:
(a) einem Referenzlichtsensor (9) zur Umwandlung eines durch die optische Referenzlichtfaser (5) geleiteten Lichts in ein Referenzsignal;
(b) einer Verarbeitungsschaltung (13) zur Durchführung einer arithmetischen Berechnung sowohl mit dem Reflexsignal als auch mit dem Referenzsignal, um Lichtintensitätsschwankungen und Faserschwingungen des Sensors auszugleichen
(c) einer Abgleichschaltung (15) zur Durchführung von Berechnungen, um auf der Grundlage einer Beziehung zwischen dem Ausgangssignalpegel der Verarbeitungsschaltung (13) und dem Abstand der zu messenden Oberfläche ein Abstandssignal zu erzeugen, das für den Abstand der zu messenden Oberfläche kennzeichnend ist.

2. Optischer Wegsensor nach Anspruch 1, bei dem die optische Lichtübertragungsfaser (3) und die optische Lichtempfangsfaser (7) im wesentlichen miteinander integriert sind.

3. Optischer Wegsensor nach Anspruch 1, bei dem eine Vielzahl optischer Lichtempfangsfasern (7, 7A, 7B) angeordnet ist, um die Intensität des von der zu messenden Oberfläche reflektierten Lichts zu vergrößern.

4. Optischer Wegsensor nach Anspruch 1, bei dem die optische Referenzlichtfaser (5) von der optischen Lichtübertragungsfaser (3) abgezweigt ist.

5. Optischer Wegsensor nach Anspruch 4, bei dem die optische Referenzlichtfaser (5) entlang der optischen Lichtübertragungsfaser (3) angeordnet ist.

6. Optischer Wegsensor nach Anspruch 1, bei dem die optische Referenzlichtfaser (5A) das Referenzlicht von der Lichtquelle (1) zu einem Hohlraum (CA), der nahe den Enden sowohl der optischen Lichtübertragungsfaser als auch der optischen Lichtempfangsfaser (3, 7) ausgebildet ist und weiter das in dem Hohlraum reflektierte Referenzlicht zum Referenzlichtsensor (9) leitet.

7. Optischer Wegsensor nach Anspruch 6, bei dem jeweils die optische Referenzlichtfaser (5) zum Leiten des Referenzlichts von der Lichtquelle (1) zum Hohlraum (CA) entlang der optischen Lichtübertragungsfaser und die optische Referenzlichtfaser zum Leiten des Referenzlichts vom Hohlraum (CA) zum Referenzlichtsensor entlang der optischen Lichtempfangsfaser angeordnet ist.

8. Optischer Wegsensor nach Anspruch 1, bei dem die Verarbeitungsschaltung (13) eine Division des Reflexsignals durch das Referenzsignal auf dem Signalpegel durchführt.

9. Optischer Wegsensor nach Anspruch 1, bei dem die Verarbeitungsschaltung (13) eine Subtraktion des Referenzsignals vom Reflexsignal auf dem Signalpegel durchführt.

10. Optischer Wegsensor nach Anspruch 1, bei dem die Abgleichschaltung (15) eine lineare Beziehung zwischen dem Signalpegel des bearbeiteten Signals und dem Abstand der zu messenden Oberfläche in logarithmischer Teilung erhält, um ein Abstandssignal entsprechend dem verarbeiteten Signal zu erzeugen.

11. Optischer Wegsensor nach Anspruch 1, bei dem jede optische Faser (3) an jedem ihrer Enden mit einer Kondensorlinse (19, 21) versehen ist, um die jeweilige optische Achse der Faser (3) zu stabilisieren.

12. Optischer Wegsensor nach Anspruch 1, bei dem Enden der optischen Lichtübertragungs- und Lichtempfangsfaser (3, 7) in einem Winkel zur zu messenden Oberfläche gebogen sind, um so in wirksamer Weise Licht zur zu messenden Oberfläche zu übertragen beziehungsweise von dort zu empfangen.

13. Optischer Wegsensor nach Anspruch 1, bei dem die optische Lichtübertragungsfaser (3), die optische Lichtempfangsfaser (7) und die optische Referenzlichtfaser (5) jeweils aus einer Vielzahl optischer Fasern zusammengesetzte optische Faserbündel sind.

## Revendications

1. Détecteur optique de déplacement pour mesurer la distance à une surface à mesurer, comprenant:
- une source de lumière (1);
- une fibre optique (3) de transmission de la lumière, pour transmettre la lumière de ladite source de lumière (1) à la surface à mesurer;
- une fibre optique (7) de réception de la lumière, pour recevoir la lumière réfléchie par la surface à mesurer;
- une fibre optique (5) de lumière de référence pour guider la lumière en provenance de ladite source de lumière (1); et
- un détecteur (11) de lumière réfléchie pour convertir en un signal de réflexion une lumière réfléchie guidée le long de ladite fibre optique (7) de réception de la lumière;
caractérisé en ce que le détecteur optique de déplacement est en outre doté de:
(a) un détecteur (9) de lumière de référence pour convertir en un signal de référence la lumière de référence guidée le long de ladite fibre optique (5) de lumière de référence;
(b) un circuit opérationnel (13) pour effectuer un calcul arithmétique à la fois sur le signal de réflexion et sur le signal de référence, pour éliminer des fluctuations d'intensité de la lumière et des vibrations de la fibre du détecteur; et
(c) un circuit de réglage (15) pour effectuer des calculs en vue de produire un signal de distance indiquant la distance à la surface à mesurer, sur base d'une relation entre le niveau du signal de sortie dudit circuit opérationnel (13) et la distance à la surface à mesurer.

2. Détecteur optique de déplacement selon la revendication 1, dans lequel ladite fibre optique (3) de transmission de la lumière et ladite fibre optique (7) de réception de la lumière sont prévues essentiellement d'une seule pièce l'une avec l'autre.

3. Détecteur optique de déplacement selon la revendication 1, dans lequel plusieurs fibres optiques (7, 7A, 7B) de réception de la lumière sont agencées pour augmenter l'intensité de la lumière réfléchie par la surface à mesurer.

4. Détecteur optique de déplacement selon la revendication 1, dans lequel ladite fibre optique (5) de lumière de référence est branchée sur ladite fibre optique (3) de transmission de la lumière.

5. Détecteur optique de déplacement selon la revendication 4, dans lequel ladite fibre optique (5) de lumière de référence est agencée le long de ladite fibre optique (7) de réception de la lumière.

6. Détecteur optique de déplacement selon la revendication 1, dans lequel ladite fibre optique (5A) de lumière de référence guide la lumière de référence provenant de ladite source de lumière (1) vers une cavité (CA) formée près d'extrémités des deux fibres optiques (3, 7) de transmission et de réception de la lumière, et guide ensuite la lumière de référence réfléchie par la cavité (CA) vers ledit détecteur (9) de lumière de référence.

7. Détecteur optique de déplacement selon la revendication 6, dans lequel ladite fibre optique (5) de lumière de référence pour guider la lumière de référence provenant de ladite source de lumière (1) vers ladite cavité (CA) est agencée le long de ladite fibre optique de transmission de la lumière, et ladite fibre optique de lumière de référence pour guider la lumière de référence de ladite cavité (CA) vers ledit détecteur de lumière de référence est agencée le long de ladite fibre optique de réception de la lumière.

8. Détecteur optique de déplacement selon la revendication 1, dans lequel ledit circuit opérationnel (13) calcule une division du niveau du signal réfléchi par le niveau du signal de référence.

9. Détecteur optique de déplacement selon la revendication 1, dans lequel ledit circuit opérationnel (13) calcule une soustraction du niveau du signal de référence du niveau du signal réfléchi.

10. Détecteur optique de déplacement selon la revendication 1, dans lequel ledit circuit de réglage (15) produit une relation linéaire entre le niveau du signal traité par le circuit opérationnel et la distance à la surface à mesurer, en coordonnées logarithmiques, pour produire un signal de distance correspondant au signal traité par la circuit opérationnel.

11. Détecteur optique de déplacement selon la revendication 1, dans lequel chaque fibre optique (3) est dotée d'un condenseur (19, 21) à chacune de ses extrémités, pour stabiliser chaque axe optique de la fibre optique.

12. Détecteur optique de déplacement selon la revendication 1, dans lequel des extrémités desdites fibres optiques (3, 7) de transmission et de réception de la lumière sont pliées suivant un angle, par rapport à la normale à la surface à mesurer, de manière à transmettre et recevoir efficacement la lumière se dirigeant vers et provenant de la surface à mesurer.

13. Détecteur optique de déplacement selon la revendication 1, dans lequel ladite fibre optique (3) de transmission de la lumière, ladite fibre optique (7) de réception de la lumière et ladite fibre optique (5) de lumière de référence sont un faisceau de fibres optiques respectivement composées de plusieurs fibres optiques.
